# EUROPÄISCHE PATENTSCHRIFT

(11) **EP 0 979 965 B1**
(45) Veröffentlichungstag und Bekanntmachung des Hinweises auf die Patenterteilung: **30.07.2003**
(21) Anmeldenummer: 99112431.4
(22) Anmeldetag: 30.06.1999
(51) Int. Cl.: F16K 1/44, F16K 27/07

(54) **Bodenventil, insbesondere Tankbodenventil**
Bottom valve, especially a tank bottom valve
Soupape de fond, en particulier une soupape de fond d'un camion-citerne

(30) Priorität: 13.08.1998 DE 19836600
(43) Veröffentlichungstag der Anmeldung: 16.02.2000
(73) Patentinhaber: APV ROSISTA GMBH, 59425 Unna (DE)
(72) Erfinder: Bräckelmann, Wolfgang, Dipl.-Ing., 59425 Unna (DE); Fischer, Norbert, Dipl.-Ing., 59320 Ennigerloh (DE); Spliethoff, Norbert, Dipl.-Ing., 48165 Münster (DE)

(56) Entgegenhaltungen:
- EP-A- 0 497 016
- EP-A- 0 834 689
- DE-A- 2 558 237
- US-A- 3 211 422
- US-A- 4 360 039
- US-A- 5 645 102

## Beschreibung

Die Erfindung betrifft einen Behälter mit Bodenventil, und mit einer im Bereich des Behälterbodens angeordneten Ausflussöffnung sowie einem sich an die Ausflussöffnung unter Zwischenschaltung des Bodenventils anschließenden Abflussrohr, wobei
- der Ausflussöffnung ein Ventildichtsitz für unabhängig voneinander betätigbar und das Abflussrohr durchdringende Ventilschäfte mit endseitigen Ventildichtkörpern zugeordnet ist, wobei ferner
- die Ventildichtkörper jeweils von zumindest einer Dichtung umgeben sind, die bei in Schließstellung befindlichen Ventildichtkörpern gegen den Ventildichtsitz anliegen, und wobei
- die Ventilschäfte konzentrisch zueinander angeordnet sind und der eine Ventilschaft einen nach unten offenen Leckageabfluss bildet.

Es ist ein derartiger Behälter mit Tankbodenventil aus der Praxis bekannt, bei welchem der obere und der untere Ventildichtkörper jeweils eine umlaufende Dichtung aufweisen und im Zuge der Ventilöffnung gemeinsam durch die Ausflussöffnung hindurch in den betreffenden Behälter hineingefahren werden. Soll dagegen eine Reinigung des Bodenventils erfolgen, dann wird der untere Ventildichtkörper von dem oberen Ventildichtkörper im Bereich des Ventildichtsitzes so weit abgezogen, dass über das Abflussrohr zugeführte Reinigungsflüssigkeit zwischen beide Ventildichtkörper eindringen und über Radialbohrungen abgeführt werden kann, die mit einer Zentralbohrung im inneren Ventilschaft für den oberen Ventildichtkörper in Verbindung stehen. Diese Radialbohrungen und die sich anschließende Zentralbohrung bilden darüber hinaus bei in Schließstellung befindlichen Ventildichtkörpern einen Leckageabfluss. Problematisch bei diesem bekannten Bodenventil ist die Tatsache, dass der Bohrungsquerschnitt sowohl der Radialbohrungen als auch der Zentralbohrung verhältnismäßig gering ist und dadurch im Zuge des Reinigungsvorganges stets nur eine beschränkte Menge an Reinigungsflüssigkeit abfließen kann.

Das führt zwangsläufig zu einem Druckaufbau und einer daraus resultierenden Druckbeaufschlagung der umlaufenden Dichtungen an dem unteren und oberen Ventildichtkörper und schließlich zu einer Vermischungsgefahr bei defekten Sitzdichtungen. Dann kann einerseits Reinigungsflüssigkeit in den Behälter eindringen, ist andererseits ein einwandfreier Leckageabfluss nicht mehr gewährleistet. Man könnte zwar daran denken, die Bohrungsquerschnitte der Radialbohrungen und der Zentralbohrung zu vergrößern, jedoch sind insoweit Grenzen gesetzt, weil die Abmessungen einerseits des oberen Ventildichtkörpers und andererseits seines inneren Ventilschaftes begrenzt sind. Denn zum Öffnen des Bodenventils muss der innere Ventilschaft gemeinsam mit dem äußeren ihn umgebenden Ventilschaft durch den Ventildichtsitz hindurch in den Behälter eingefahren werden, so dass lediglich der sich zwischen dem Ventildichtsitz und dem äußeren Ventilschaft einstellende Ringraum als Abflussquerschnitt zur Verfügung steht. Um einen hinreichenden Abflussquerschnitt zu erhalten, sind die Durchmesser des äußeren Ventilschaftes und folglich auch inneren Ventilschaftes zwangsläufig auf ein vorgegebenes Maß beschränkt. Das gilt in gleicher Weise für die Zentralbohrung.

Ein Behälter mit Bodenventil der eingangs beschriebenen Gestaltung ist durch die DE 42 03 724 C2 bekannt geworden. Vorliegend wird eine Vorrichtung zur Reinigung eines Doppelsitzventils beschrieben, welche mit geringem Bauaufwand einen gleichzeitig minimalen, ökonomischen und umweltschonenden Einsatz von Reinigungsmitteln sicherstellen soll.

Im Rahmen der US-PS 4 360 039 wird ein Ventil mit Leckkontrolle sowie einem oberen und unteren Teil eines Gehäuses beschrieben. Zwischen den beiden Gehäuseteilen findet eine Verbindung unter Rückgriff auf einen konischen Ventilsitz mit zwei Dichtringen unterschiedlichen Durchmessers statt. Die beiden Ventildichtungen wirken mit einem Dreiwegeventil mit zwei äußeren Kegelflächen zusammen.

Die EP 0 497 016 A1 befasst sich mit einer Ventileinheit, die eine Verbindung zwischen zwei Leitungen zulässt oder verhindert. Zu diesem Zweck sind zwei koaxial zueinander angeordnete Ventilkörper vorgesehen, welche sich in Richtung auf einen Ventilsitz und zurück bewegen lassen.

Die schließlich noch zu berücksichtigende EP 0 834 689 A1 befasst sich mit einem Schließventil. Dieses verfügt über einen Ventilkörper, welcher eine Schließfläche besitzt, die mit einer jeweiligen Ventilsitzoberfläche zusammenwirkt.

Der Erfindung liegt die Aufgabe zugrunde, einen Behälter mit Bodenventil, insbesondere Tankbodenventil, der eingangs beschriebenen Ausführungsform zu schaffen, bei welchem die Dichtungen der Ventildichtkörper im Zuge des Reinigungsvorganges zur Vermeidung einer Vermischungsgefahr mit dem im Tank bzw. Ventilgehäuse anstehenden Produkt gleichsam druckfrei und unbelastet bleiben, sich folglich durch hohe Lebensdauer auszeichnen und im übrigen stets eine einwandfreie Abdichtung der Ausflussöffnung und des Leckageabflusses gewährleistet ist.

Diese Aufgabe löst die Erfindung bei einem gattungsgemäßen Behälter mit Bodenventil, insbesondere Tankbodenventil, dadurch, dass der äußere Ventilschaft als Leckageabflussrohr mit einem Innendurchmesser ausgebildet ist, der nahezu - bis auf die doppelte Rohrwanddicke - dem Innendurchmesser des Ventildichtsitzes entspricht, dass der von dem inneren Ventilschaft betätigte Ventildichtkörper eine Mitteldichtung aufweist, gegen die der andere von dem äußeren Ventilschaft betätigte Ventildichtkörper mit einem Dichtkragen bei in Offenstellung gegeneinander gefahren Ventilschäften anliegt, und dass der Ventildichtsitz eine der Mitteldichtung zugeordnete Einformung in der Berührungsfläche aufweist und die Einformung bei in Schließstellung befindlichen Ventilschäften bzw. Ventildichtkörpern mit dem Leckageabflussrohr in Verbindung steht. - Diese Maßnahmen der Erfindung haben zunächst einmal zur Folge, dass der Leckageabflussquerschnitt und folglich der Innendurchmesser des Leckageabflussrohres maximiert sind, weil der Innendurchmesser praktisch dem Innendurchmesser des Ventildichtsitzes und folglich dem Ausflußquerschnitt entspricht - sieht man einmal von der Wanddicke des Leckageabflußrohres ab. Dadurch wird im Zuge eines Reinigungsvorganges, wenn also lediglich das Leckageabflußrohr mit dem unteren Ventildichtsitz in Offenstellung überführt worden ist eine nahezu druckfreie Beaufschlagung der Ventildichtungen mit Reinigungsflüssigkeit erreicht. Denn die Reinigungsflüssigkeit kann praktisch unbehindert über das Leckageabflußrohr abfließen. Folglich wird auch jede Vermischungsgefahr vermieden, weil einwandfreie Dichtverhältnisse ebenso wie ein einwandfreier Leckageabfluß gewährleistet sind. Bei dem erfindungsgemäßen Bodenventil werden darüber hinaus die Dichtungsverhältnisse insoweit optimiert, als der obere Ventildichtkörper mit zwei Dichtungen, nämlich zusätzlich mit einer Mitteldichtung ausgerüstet ist, welche einerseits die Dichtwirkung bei in Schließstellung befindlichem Bodenventil erhöht, andererseits eine einwandfreie Abdichtung gegen den unteren Ventildichtkörper bzw. dessen Dichtkragen bei in Offenstellung befindlichem Bodenventil sicherstellt, so daß das abfließende Medium nicht in das Leckageabflußrohr und folglich den äußeren Ventilschaft eindringen und unkontrolliert abfließen kann. Das gilt selbst dann, wenn Druckschläge auftreten, zumal sich sämtliche Dichtungen auf gleichsam einem Balancedurchmesser befinden.

Weitere erfindungswesentliche Merkmale sind im folgenden aufgeführt. So sieht die Erfindung vor, daß das Leckageabflußrohr von einem druckluftbeaufschlagbaren Ringkolben umgeben ist, der bei Druckluftbeaufschlagung gegen einen Mitnehmer am Außenumfang des Leckagerohres und einen federbelasteten Federteller arbeitet und das Leckageabflußrohr aus Schließstellung in Offenstellung überführt, so daß dann der Reinigungsprozeß durchgeführt werden kann. Nach Beendigung der Druckluftbeaufschlagung sorgt der federbelastete Federteller dafür, daß der Ringkolben in seine Ausgangsstellung zurückgeführt wird. Zweckmäßigerweise ist der Ringkolben in einem die beiden Ventilschäfte umgebenden Zylindergehäuse geführt, welches an dem Behälterboden und/oder dem Abflußrohr angeflanscht ist. Der Mitnehmer kann als Rohrschulter, Rohrbund, Sprengring oder dergleichen ausgebildet sein, welcher das Leckageabflußrohr umgibt. Vorzugsweise sind oberhalb des Ringkolbens voneinander distanzierte Ringböden unter Bildung einer Leckageabführung und Leckageerkennung angeordnet, nämlich in bezug auf das Abflußrohr. Auf den einen Ringboden und die Lackageabführung kann allerdings auch verzichtet werden. Außerdem können die beiden Ringböden zu einem einteiligen Bauteil zusammengefaßt sein. Die gesamte Anordnung ist so getroffen, daß im Wege einer Demontage, Wartung oder dergleichen beispielsweise nach Abflanschen des Zylindergehäuses von dem Abflußrohr bzw. Behälterboden die Ringböden und der Ringkolben ebenso einfach ausgebaut werden können wie das Leckageabflußrohr und der innere Ventilschaft mit ihren Ventildichtkörpern. - Weiter sieht die Erfindung vor, daß in dem Zylindergehäuse unterhalb des Ringkolbens ein druckluftbeaufschlagbarer Ventilkolben angeordnet ist, der in dem Zylindergehäuse und auf dem Leckageabflußrohr geführt ist und unterhalb des Leckageabflußrohres mit dem inneren Ventilschaft über z. B. sternförmig angeordnete Verbindungsstege lösbar in Verbindung steht. Insoweit wird eine verhätlnismäßig einfache Betätigung des inneren Ventilschaftes mit seinem Ventildichtkörper erreicht. Dabei kann der Ventilkolben als Stufenkolben ausgebildet sein und zwischen einer Kolbenstufe und dem Federteller eine Schließfeder angeordnet sein, welche den Federteller gegen einen Anschlag am Zylindergehäuse und den Ringkolben drückt. Für den letzteren Fall liegt der Federteller zweckmäßigerweise gegen die Unterseite des Ringkolbens an und distanziert den Ringkolben von dem Anschlag für den Federteller um einen vorgegebenen Kolbenhub, welcher dem Öffnungshub des Leckageabflußrohres in umgekehrter Bewegungsrichtung entspricht. Der schließfederbelastete Federteller sorgt im übrigen stets für die Rückstellung des Ringkolbens in Ausgangsstellung und für die Rückstellung des Leckageabflußrohres in Schließstellung sobald die Druckluftbeaufschlagung des Ringkolbens beendet ist.

Im folgenden wird die Erfindung anhand einer lediglich ein Ausführungsbeispiel darstellenden Zeichnung näher erläutert. Es zeigen:

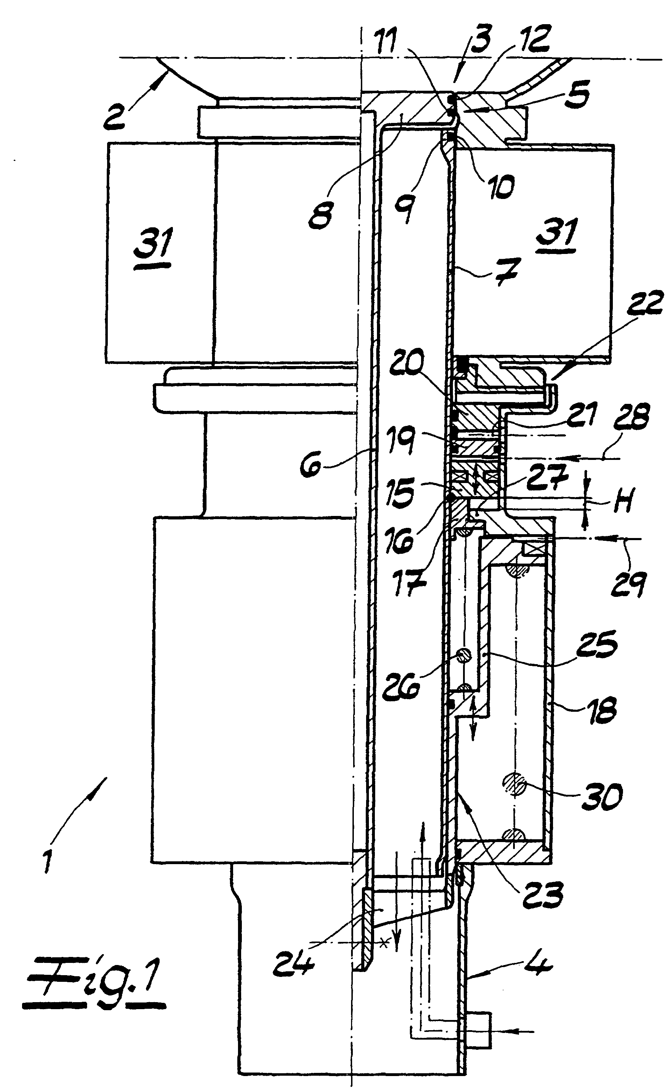

- Fig. 1: ein erfindungsgemäßes Bodenventil hälftig in einem schematischen Vertikalschnitt bei in Schließstellung befindlichen Ventildichtungskörpern,

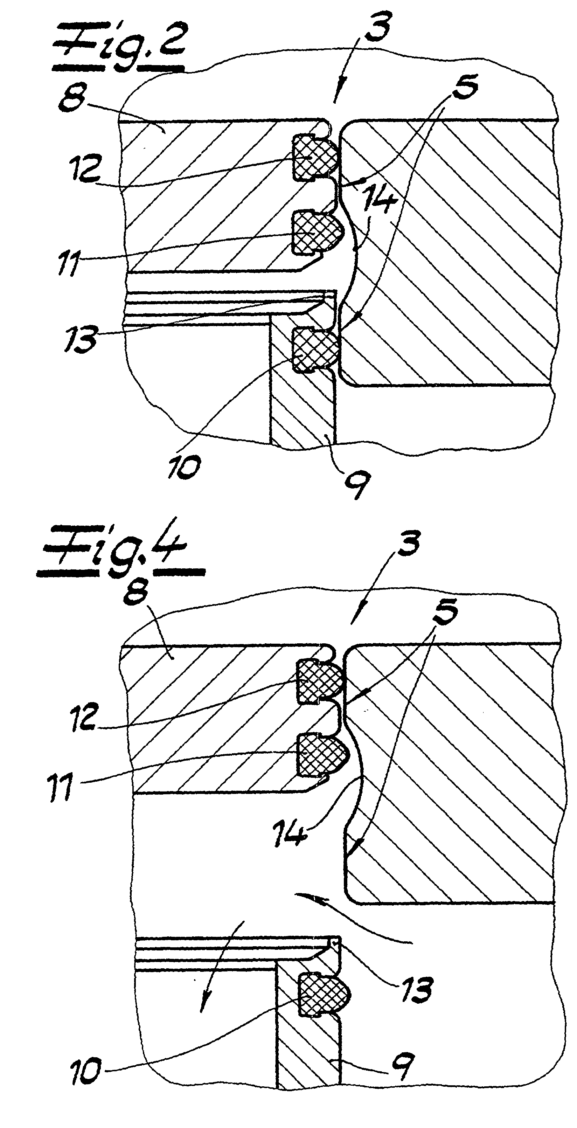

- Fig. 2: einen vergrößerten Ausschnitt aus dem Gegenstand nach Fig. 1 im Bereich des Ventildichtsitzes mit den Ventildichtkörpern,
- Fig. 3: den Gegenstand nach Fig. 2 bei in Offenstellung befindlichen Ventildichtkörpern und geschlossenem Leckageabflußrohr,
- Fig. 4: bei in Offenstellung befindlichem Leckageabflußrohr im Zuge der Zuführung von Reinigungsflüssigkeit und deren Abführung über das Leckageabflußrohr.

In den Figuren ist ein Bodenventil 1 für Behälter 2 mit einer im Bereich des Behälterbodens angeordneten Ausflußöffnung 3 und einem sich an die Ausflußöffnung 3 unter Zwischenschaltung des Bodenventils 1 anschließenden Abflußrohr 4 bzw. Abflußrohranschlüssen dargestellt, wobei der Ausflußöffnung 3 ein Ventildichtsitz 5 für unabhängig voneinander betätigbare und das Abflußrohr 4 durchdringende Ventilschäfte 6, 7 mit endseitigen Ventildichtkörpern 8, 9 zugeordnet ist. Das Abflußrohr 4 dient auch zur Aufnahme von Spülmittelzuführung für die Leckageraumreinigung. Nach dem Ausführungsbeispiel ist die Ausflußöffnung 3 selbst als Ventildichtsitz 5 ausgebildet. Die Ventildichtkörper 8, 9 sind jeweils von zumindest einer Dichtung 10, 11, 12 umgeben, die bei in Schließstellung befindlichen Ventildichtkörpern 8, 9 gegen den Ventildichtsitz 5 anliegen. Die Ventilschäfte 6, 7 sind konzentrisch zueinander angeordnet. Der eine Ventilschaft 7 bildet einen nach unten offenen Leckageabfluß. Zu diesem Zweck ist der äußere Ventilschaft 7 als Leckageabflußrohr mit einem Innendurchmesser ausgebildet, der nahezu - bis auf die doppelte Rohrwandicke - dem Innendurchmesser des Ventildichtsitzes 5 entspricht. Der von dem inneren Ventilschaft 6 betätigte Ventildichtkörper 8 weist eine Mitteldichtung 11 auf, gegen die der andere von dem äußeren Ventilschaft 7 betätigte Ventildichtkörper 9 mit einem Dichtkragen 13 bei in Offenstellung gegeneinander gefahrenen Ventilschäften 6, 7 anliegt. Der Ventildichtsitz 5 weist eine der Mitteldichtung 11 zugeordnete Einformung 14 in der Berührungsfläche auf. Die Einformung 14 steht bei in Schließstellung befindlichen Ventilschäften 6, 7 bzw. Ventildichtkörpern 8., 9 mit dem Leckageabflußrohr 7 in Verbindung, damit im Falle der Leckage ein einwandfreies Abfließen von Leckageflüssigkeit gewährleistet ist.

Das Leckageabflußrohr 7 ist von einem druckluftbeaufschlagbaren Ringkolben 15 umgeben, der bei Druckluftbeaufschlagung gegen einen Mitnehmer 16 am Außenumfang des Leckageabflußrohres 7 und einen federbelasteten Federteller 17 arbeitet und das Leckageabflußrohr 7 aus Schließstellung in Offenstellung überführt. Der Ringkolben 15 ist in einem die beiden Ventilschäfte 6, 7 umgebenden Zylindergehäuse 18 geführt, welches an den Behälterboden und/oder das Abflußrohr 4 angeflanscht ist. Der Mitnehmer 16 ist nach dem Ausführungsbeispiel als Sprengring ausgebildet. Oberhalb des Ringkolbens 15 sind voneinander distanzierte oder als einteiliges Bauteil ausgebildete Ringböden 19, 20 unter Bildung einer Leckageabführung 21 und einer Leckageerkennung 22 angeordnet, nämlich für den Fall, daß Leckage im Durchdringungsbereich von Leckageabflußrohr 7 und Abflußrohr 4 eintreten sollte.

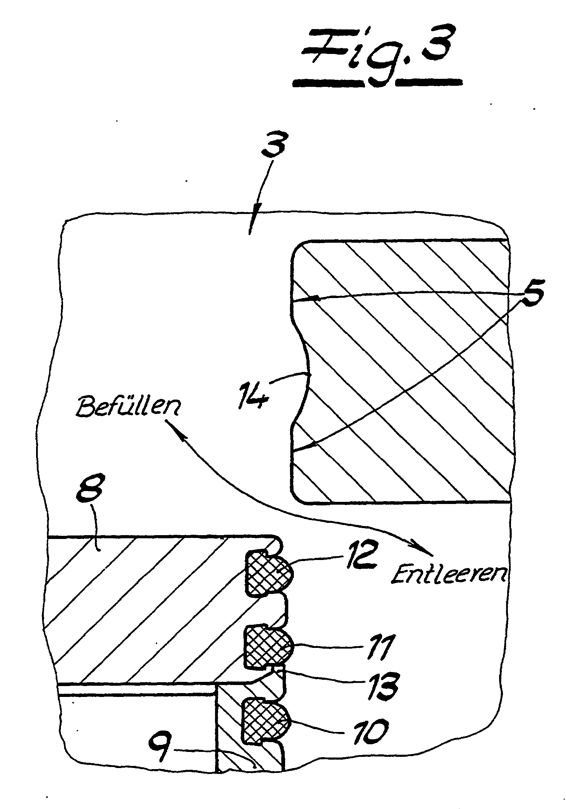

In dem Zylindergehäuse 18 ist unterhalb des Ringkolbens 15 ein druckluftbeaufschlagbarer Ventilkolben 23 angeordnet, der in dem Zylindergehäuse 18 und auf dem Leckageabflußrohr 7 geführt ist und unterhalb des Leckageabflußrohres 7 mit dem inneren Ventilschaft 6 über z. B. sternförmig angeordnete Verbindungsstege 24 in Verbindung steht. Diese Verbindung ist zu Montage- bzw. Demontagezwecke lösbar. Der Ventilkolben 23 ist als Stufenkolben ausgebildet. Zwischen einer Kolbenstufe 25 und dem Federteller 17 ist eine Schließfeder 26 angeordnet, welche den Federteller 17 gegen einen Anschlag 27 am Zylindergehäuse 18 und den Ringkolben 15 drückt. Der Federteller 17 liegt gegen die Unterseite des Ringkolbens 15 an und distanziert den Ringkolben 15 von dem Anschlag 27 für den Federteller 17 um einen vorgegebenen Kolbenhub H, welcher dem Öffnungshub des Leckageabflußrohres 7 entspricht. Im übrigen wird der Ringkolben 15 von dem schließfederbeaufschlagten Federteller 17 in seiner Ausgangsstellung zurückgeführt, wenn dessen Druckluftbeaufschlagung beendet ist. Ebenso wird dann das Leckageabflußrohr 7 in seine Schließstellung von dem Federteller 17 zurückgeführt bis dieser gegen den Mitnehmer 16 anliegende Federteller 17 gegen den Anschlag 27 des Zylindergehäuses 18 gefahren ist. Der Ventilkolben 23 ist im übrigen von einer Rückstellfeder 30 beaufschlagt. Die Druckluftzuführungen 28 und 29 für den Ringkolben 15 und den Ventilkolben 23 sind angedeutet. - Durch den Ventilkolben 23 wird bei Druckluftzufuhr bei 29 die Offenstellung der Ventildichtkörper 8, 9 angefahren (vgl. Fig. 3).

Die Befüllung und Entleerung des Tanks bzw. Behälters erfolgt über das Ventilgehäuse mit seitlichen Rohrstutzen 31. Das Abflußrohr 4 ist ein Spritzschutz gegen drucklos ablaufende Reinigungsflüssigkeit.

## Patentansprüche

1. Behälter (2) mit Bodenventil (1), insbesondere Tankbodenventil, und mit einer im Bereich des Behälterbodens angeordneten Ausflussöffnung (3) sowie einem sich an die Ausflussöffnung (3) unter Zwischenschaltung des Bodenventils (1) anschließenden Abflussrohr (4), wobei
- der Ausflussöffnung (3) ein Ventildichtsitz (5) für unabhängig voneinander betätigbar und das Abflussrohr (4) durchdringende Ventilschäfte (6, 7) mit endseitigen Ventildichtkörpern (8, 9) zugeordnet ist, wobei ferner
- die Ventildichtkörper (8, 9) jeweils von zumindest einer Dichtung (10, 11, 12) umgeben sind, die bei in Schließstellung befindlichen Ventildichtkörpern (8, 9) gegen den Ventildichtsitz (5) anliegen, und wobei
- die Ventilschäfte (6, 7) konzentrisch zueinander angeordnet sind und der eine Ventilschaft (7) einen nach unten offenen Leckageabfluss bildet,
**dadurch gekennzeichnet, dass**
der äußere Ventilschaft (7) als Leckageabflussrohr (7) mit einem Innendurchmesser ausgebildet ist, der nahezu dem Innendurchmesser des Ventildichtsitzes (5) entspricht,
dass der von dem inneren Ventilschaft (6) betätigte Ventildichtkörper (8) eine Mitteldichtung (11) aufweist, gegen welche der andere von dem äußeren Ventilschaft (7) betätigte Ventildichtkörper (9) mit einem Dichtkragen (13) bei in Offenstellung gegeneinander gefahrenen Ventilschäften (6, 7) anliegt,
und dass der Ventildichtsitz (5) eine der Mitteldichtung (11) zugeordnete Einformung (14) in der Berührungsfläche aufweist und die Einformung (14) bei in Schließstellung befindlichen Ventilschäften (6, 7) bzw. Ventildichtkörpern (8, 9) mit dem Leckageabflussrohr (7) in Verbindung steht.

2. Behälter (2) nach Anspruch 1, **dadurch gekennzeichnet, dass** das Leckageabflussrohr (7) von einem druckluftbeaufschlagbaren Ringkolben (15) umgeben ist, der bei Druckluftbeaufschlagung gegen einen Mitnehmer (16) am Außenumfang des Leckageabflussrohres (7) und einen federbelasteten Federteller (17) arbeitet und das Leckageabflussrohr (7) aus Schließstellung in Offenstellung überführt.

3. Behälter (2) nach Anspruch 1 oder 2, **dadurch gekennzeichnet, dass** der Ringkolben (15) in einem die beiden Ventilschäfte (6, 7) umgebenden Zylindergehäuse (18) geführt ist, welches an den Behälterboden und/oder das Abflussrohr (4) angeschlossen ist.

4. Behälter (2) nach Anspruch 1 bis 3, **dadurch gekennzeichnet, dass** der Mitnehmer (16) als Rohrschulter, Rohrbund, Sprengring oder dergleichen ausgebildet ist.

5. Behälter (2) nach einem der Ansprüche 1 bis 4, **dadurch gekennzeichnet, dass** oberhalb des Ringkolbens (15) voneinander distanzierte Ringböden (19, 20) unter Bildung einer Leckageabführung (21) und Leckageerkennung (22) angeordnet sind.

6. Behälter (2) nach einem der Ansprüche 1 bis 5, **dadurch gekennzeichnet, dass** in dem Zylindergehäuse (18) unterhalb des Ringkolbens (15) ein druckluftbeaufschlagbarer Ventilkolben (23) angeordnet ist, der in dem Zylindergehäuse (18) und auf dem Leckageabflussrohr (7) geführt ist und unterhalb des Leckageabflussrohres (7) mit dem inneren Ventilschaft (6) über z. B. sternförmig angeordnete Verbindungsstege (24) in Verbindung steht.

7. Behälter (2) nach einem der Ansprüche 1 bis 6, **dadurch gekennzeichnet, dass** der Ventilkolben (23) als Stufenkolben ausgebildet ist und zwischen einer Kolbenstufe (25) und dem Federteller (17) eine Schließfeder (26) angeordnet ist, welche den Federteller (17) gegen den Ringkolben (15) und einen Anschlag (27) am Zylindergehäuse drückt.

8. Behälter (2) nach einem der Ansprüche 1 bis 7, **dadurch gekennzeichnet, dass** der Federteller (17) gegen die Unterseite des Ringkolbens (15) anliegt und den Ringkolben (15) von dem Anschlag (27) für den Federteller (17) um einen vorgegebenen Kolbenhub (H) distanziert, welcher dem Öffnungshub des Leckageabflussrohres (7) entspricht.

9. Behälter (2) nach einem der Ansprüche 1 bis 8, **dadurch gekennzeichnet, dass** der Ventilkolben (23) von einer Rückstellfeder (30) beaufschlagt ist.

## Claims

1. Container (2) provided with a bottom valve (1), more especially a tank bottom valve, and an outlet aperture (3) disposed in the region of the container base, as well as a discharge pipe (4) which communicates with the outlet aperture (3) by the interposition of the bottom valve (1), wherein
- the outlet aperture (3) has associated therewith a valve sealing seat (5) for valve stems (6, 7), which are actuatable independently of each other and penetrate the discharge pipe (4), said stems having valve sealing bodies (8, 9) at their ends, wherein also
- the valve sealing bodies (8, 9) are each surrounded by at least one seal (10, 11, 12), which seals abut against the valve sealing seat (5) when the valve sealing bodies (8, 9) are in their closed position, and wherein
- the valve stems (6, 7) are disposed concentrically with each other, and the one valve stem (7) forms a downwardly open leakage discharge means,
**characterised in that**
the outer valve stem (7) is in the form of a leakage discharge pipe (7), having an internal diameter which virtually corresponds to the internal diameter of the valve sealing seat (5),
**in that** the valve sealing body (8), which is actuated by the inner valve stem (6), has a central seal (11), against which abuts the other valve sealing body (9), which is actuated by the outer valve stem (7) and has a sealing collar (13), when the valve stems (6, 7) are moved towards each other in the open position,
and **in that**, in the contact area, the valve sealing seat (5) has a moulded portion (14) associated with the central seal (11), and the moulded portion (14) communicates with the leakage discharge pipe (7) when the valve stems (6, 7) or respectively the valve sealing bodies (8, 9) are in their closed position.

2. Container (2) according to claim 1, **characterised in that** the leakage discharge pipe (7) is surrounded by an annular piston (15), which can be acted upon by compressed air, and, with the introduction of compressed air, said piston operates against an entrainment means (16) on the outer circumference of the leakage discharge pipe (7) and against a spring-loaded spring plate (17) and transfers the leakage discharge pipe (7) from the closed position to the open position.

3. Container (2) according to claim 1 or 2, **characterised in that** the annular piston (15) is guided in a cylinder housing (18), which surrounds the two valve stems (6, 7) and communicates with the container base and/or the discharge pipe (4).

4. Container (2) according to claims 1 to 3, **characterised in that** the entrainment means (16) is in the form of a pipe shoulder, a pipe collar, a spring ring or the like.

5. Container (2) according to one of claims 1 to 4, **characterised in that** annular bases (19, 20), which are spaced apart from each other, are disposed above the annular piston (15) so as to form a leakage removal means (21) and a leakage identification means (22).

6. Container (2) according to one of claims 1 to 5, **characterised in that** a valve piston (23), which can be acted upon by compressed air, is disposed in the cylinder housing (18) beneath the annular piston (15), which valve piston is guided in the cylinder housing (18) and on the leakage discharge pipe (7) and communicates, beneath the leakage discharge pipe (7), with the inner valve stem (6) via connecting webs (24) which, for example, are radially disposed.

7. Container (2) according to one of claims 1 to 6, **characterised in that** the valve piston (23) is in the form of a multistage piston, and a locking spring (26) is disposed between one piston stage (25) and the spring plate (17), which spring urges the spring plate (17) against the annular piston (15) and a stop member (27) on the cylinder housing.

8. Container (2) according to one of claims 1 to 7, **characterised in that** the spring plate (17) abuts against the underside of the annular piston (15) and keeps apart the annular piston (15) from the stop member (27) for the spring plate (17) by a prescribed piston stroke (H), which corresponds to the opening stroke of the leakage discharge pipe (7).

9. Container (2) according to one of claims 1 to 8, **characterised in that** the valve piston (23) is acted upon by a restoring spring (30).

## Revendications

1. Récipient (2) équipé d'une soupape de vidange (1), en particulier d'une soupape de vidange pour citerne, et pourvu d'un orifice d'écoulement (3) situé dans la zone du fond du récipient, ainsi que d'un tuyau d'évacuation (4) qui fait suite à l'orifice d'écoulement (3), avec interposition de la soupape de vidange (1),
- un siège étanche de soupape (5) destiné à des tiges de soupapes (6, 7), actionnables indépendamment l'une de l'autre et traversant le tuyau d'évacuation (4), et comportant des corps d'étanchéité terminaux (8, 9), étant associé à l'orifice d'écoulement (3),
- les corps d'étanchéité de soupapes (8, 9) étant chacun entourés par au moins un joint (10, 11, 12) qui, lorsque les corps d'étanchéité (8, 9) se trouvent en position de fermeture, reposent contre le siège étanche de soupape (5), et
- les tiges de soupape (6, 7) étant montées de façon concentrique l'une par rapport à l'autre et l'une des tiges de soupape (7) présentant un dispositif d'évacuation pour fuites, ouvert vers le bas,
**caractérisé en ce que**
la tige de soupape extérieure (7) est conformée en tuyau d'évacuation pour fuites (7) présentant un diamètre intérieur qui correspond approximativement au diamètre intérieur du siège étanche de soupape (5),
**en ce que** le corps d'étanchéité de soupape (8) actionné par la tige de soupape intérieure (6) présente un joint médian (11) contre lequel l'autre corps d'étanchéité de soupape (9), qui est actionné par la tige de soupape extérieure (7), vient s'appliquer par un collet d'étanchéité (13) lorsque les tiges de soupapes (6, 7) sont ramenées l'une contre l'autre en position d'ouverture,
et **en ce que** le siège d'étanchéité de soupape (5) présente, dans la surface de contact, une partie incurvée (14) associée au joint médian (11), et la partie incurvée (14), lorsque les tiges de soupapes (6, 7) et/ou les corps d'étanchéité de soupapes (8, 9) sont en position de fermeture, communique avec le tuyau d'évacuation pour fuites (7).

2. Récipient (2) selon la revendication 1, **caractérisé en ce que** le tuyau d'évacuation pour fuites (7) est entouré par un piston annulaire (15) susceptible d'être sollicité par de l'air comprimé qui, en cas de sollicitation par de l'air comprimé, vient appuyer contre un toc d'entraînement (16) présent sur la circonférence externe du tuyau d'évacuation pour fuites (7) et contre une coupelle de ressort (17) placée sous l'action d'un ressort, et qui fait passer le tuyau d'évacuation pour fuites (7) de la position fermée à la position ouverte.

3. Récipient (2) selon la revendication 1 ou 2, **caractérisé en ce que** le piston annulaire (15) est guidé dans un carter de cylindre (18) entourant les deux tiges de pistons (6, 7), carter qui est raccordé au fond du récipient et/ou au tuyau d'évacuation (4).

4. Récipient (2) selon la revendication 1 à 3, **caractérisé en ce que** le toc d'entraînement (16) est conformé en épaulement tubulaire, en nervure tubulaire, en anneau de retenue ou similaire.

5. Récipient (2) selon l'une des revendications 1 à 4, **caractérisé en ce qu'**au-dessus du piston annulaire (15) sont disposés, à distance l'un de l'autre, des plateaux annulaires (19, 20) qui constituent un dispositif d'évacuation pour fuites (21) et de détection de fuites (22).

6. Récipient (2) selon l'une des revendications 1 à 5, **caractérisé en ce qu'**est monté, dans le carter de cylindre (18), sous le piston annulaire (15), un piston à soupape (23) susceptible d'être sollicité par de l'air comprimé, qui est guidé dans le carter de cylindre (18) et sur le tuyau d'évacuation pour fuites (7) et qui, sous le tuyau d'évacuation pour fuites (7), communique avec la tige de piston intérieure (6) par l'intérmédiaire, par exemple, d'ailettes de liaison (24) disposées en étoile.

7. Récipient (2) selon l'une des revendications 1 à 6, **caractérisé en ce que** le piston à soupape (23) est conformé en piston à gradins et **en ce qu'**est disposé, entre un gradin de piston (25) et la rondelle de ressort (17), un ressort de fermeture (26) qui appuie la coupelle de ressort (17) contre le piston annulaire (15) et contre une butée (27) présente sur le carter de cylidnre.

8. Récipient (2) selon l'une des revendications 1 à 7, **caractérisé en ce que** la coupelle de ressort (17) repose contre la face inférieure du piston annulaire (15) et maintient le piston annulaire (15) à distance de la butée (27) destinée à la coupelle de ressort (17), suivant la valeur d'une course de piston prédéterminée (H) qui correspond à la course d'ouverture du tuyau d'évacuation pour fuites (7).

9. Récipient (2) selon l'une des revendications 1 à 8, **caractérisé en ce que** le piston à soupape (23) est sollicité par un ressort de rappel (30).
